# EUROPEAN PATENT APPLICATION

(11) **EP 2 288 192 A2**
(43) Date of publication of application: **23.02.2011**
(21) Application number: 10171472.3
(22) Date of filing: 30.07.2010
(51) Int. Cl.: H04W 8/22

(54) **Partial switch-off mode support in a mobile phone**

(30) Priority: 21.08.2009 IN CH19902009
(71) Applicant: Alcatel Lucent, 75007 Paris (FR)
(72) Inventor: Adharapurapu, Pramod, 560045 Bangalore (IN)
(74) Representative: Raets, David

(57) **Abstract**

Partial switch-off mode support in a mobile phone. Embodiments disclosed herein relate to tracking of mobile phones. Embodiments disclosed herein enable methods and systems for tracking a mobile phone when the mobile phone has switched off by the user by enabling the mobile phone to enter a mode called partially switched off mode. In a mobile phone, which is in partially switched off mode, the mobile phone transmits the location of the mobile phone to the network at specific intervals.

## Description

### FIELD OF INVENTION

This invention relates to mobile phones, and more particularly to tracking of mobile phones.

### BACKGROUND OF INVENTION

Currently, it is possible to track the location of a mobile phone using means like triangulation, Global Positioning System (GPS) co-ordinates and so on. In triangulation, the position of a mobile phone is tracked by measuring the strength of the signal received by the mobile phone from atleast three mobile base stations. In GPS, the location of the mobile phone is tracked using co-ordinates in terms of longitude and latitude received from a plurality of medium earth orbit satellites. The co-ordinates of the mobile phone, obtained using triangulation or GPS may be sent to a distant location and used to track the location of the mobile phone.

However, for the above methods to work, mobile phone should be turned on. Only if the mobile phone is turned on, will the GPS module present in the mobile phone work, and the mobile phone will be able to transmit its co-ordinates to a distant location.

### SUMMARY OF INVENTION

Accordingly, the embodiments herein provides a method for enabling a mobile phone to transmit location information in a telecommunication network when the mobile phone is switched off, the method comprising steps of the network sending a signal comprising of a plurality of parameters to the mobile phone, wherein the signal enables a partial switch off mode; the mobile phone storing the parameters in a memory storage in the mobile phone and sending an acknowledgement on storing the parameters in the memory; the mobile phone checking if the partial switch off mode is enabled when user of the mobile phone attempts to switch the mobile phone off; the mobile phone performing a partial switch off if the partial switch off mode is enabled; and the mobile phone sending location of the mobile phone at a first periodic interval. When the mobile phone is partially switched off, an indication is provided at a second periodic interval. The parameters comprise of the first periodic interval, the second periodic interval and a parameter to notify if the indication is to be provided. On failing to contact the mobile phone, the method further comprising of the network storing the signal; the network checking for availability of the mobile phone at periodic interval; and the network sending the signal to the mobile phone on contacting the mobile phone. The location information comprises of latitude and longitude co-ordinates of location of the mobile phone, and a unique identity of the mobile phone.

Embodiments herein further disclose a mobile phone enabled to transmit location information when the mobile phone is switched off, the mobile phone comprising atleast one means adapted for storing parameters in a memory storage in the mobile phone, wherein the parameters are received from network to which the mobile phone belongs and the parameters enable a partial switch off mode; checking if the partial switch off mode is enabled when user of the mobile phone attempts to switch the mobile phone off; performing a partial switch off if the partial switch off mode is enabled; and sending location of the mobile phone at a first periodic interval. The mobile phone is adapted to provide an indication at a second periodic interval when the mobile phone is partially switched off. The mobile phone is adapted to send an acknowledgement to the network, on storing the parameters in the memory storage.

Also, disclosed herein is a network enabled to track location of a mobile phone, the network comprising atleast one means adapted for creating a signal to indicate to the mobile phone to perform a partial switch off, wherein the signal comprises of a plurality of parameters to control the partial switch off in the mobile phone; and sending the signal to the mobile phone. The network is adapted to receive an acknowledgement from the mobile phone, after the mobile phone stores the parameters in memory of the mobile phone. The network is further adapted for storing the signal on failing to contact the mobile phone; checking for availability of the mobile phone at periodic interval; and sending the signal to the mobile phone on contacting the mobile phone.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

### BRIEF DESCRIPTION OF FIGURES

This invention is illustrated in the accompanying drawings, through out which like reference letters indicate corresponding parts in the various figures. The embodiments herein will be better understood from the following description with reference to the drawings, in which:

FIG. 1 depicts a system for tracking a mobile phone, according to embodiments, as disclosed herein;

FIG. 2 depicts elements of a network, according to embodiments as disclosed herein;

FIG. 3 depicts a mobile phone, according to embodiments as disclosed herein;

FIG. 4 depicts an exemplary format of a signal sent by the network to the mobile phone, according to embodiments as disclosed herein; and

FIGs. 5a and 5b depict a flowchart, according to embodiments as disclosed herein.

### DETAILED DESCRIPTION OF INVENTION

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

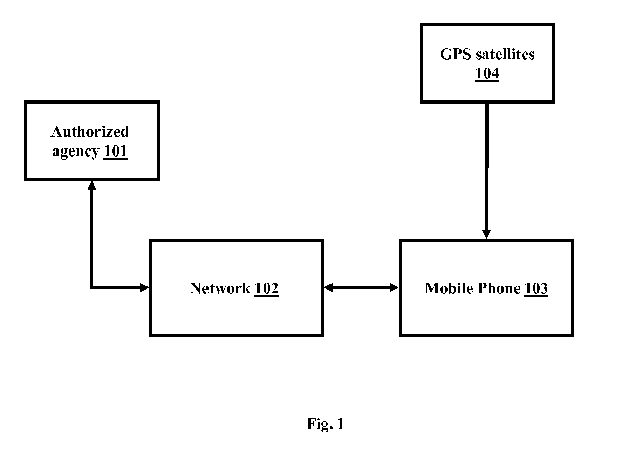

The embodiments herein disclose methods and systems of tracking a mobile phone when the mobile phone is switched off by the user. Referring now to the drawings, and more particularly to FIGS. 1 through 5, where similar reference characters denote corresponding features consistently throughout the figures, there are shown preferred embodiments.

Embodiments disclosed herein enable methods and systems for tracking a mobile phone when the mobile phone has switched off by the user by enabling the mobile phone to enter a mode called partially switched off mode. In a mobile phone, which is in partially switched off mode, the mobile phone transmits the location of the mobile phone to the network at specific intervals.

FIG. 1 depicts a system for tracking a mobile phone, according to embodiments, as disclosed herein. FIG. 1 depicts an authorized agency 101, a network 102, a mobile phone 103 and Global Positioning System (GPS) satellites 104. The authorized agency 101 provides information to the network 102 on the mobile phone to be tracked. The authorized agency 101 may be a law enforcement agency, which has the authorization from the Government to track certain users. The authorized agency 101 may also be an individual, like a parent who wants to track his children's movement or an employer who wants to track his employee's location. The information provided by the authorized agency 101 to the network 102 comprises of information like the ID of the mobile phone, the interval at which the location is to be provided, whether any indication is to be provided to the user of the mobile phone 103 and the time interval for this indication. If no time interval at which the location is to be provided has been mentioned, then a pre-defined time interval may be taken. In an example, the pre-defined time interval may be 1 minute. In some embodiments, the time interval for the indication may be specific to the manufacturer of the mobile phone 103. The ID of the mobile phone may be phone number of the user of the mobile phone 103. The ID of the mobile phone may be the International Mobile Subscriber Identity (IMSI) of the user of the mobile phone 103. The ID of the mobile phone may be the International Mobile Equipment Identity (IMEI) of the user of the mobile phone 103. The network 102 is the network of the service provider being used by the user of the mobile phone 103 for mobile services. The network 102 stores parameters extracted from the information in a memory present in the network 102. Using the ID of the mobile number, the network 102 identifies the user and the mobile phone 103 the user is currently using. The network 102 then checks if the mobile phone 103 is currently available. The mobile phone 103 will be unavailable if the mobile phone 103 is switched off or the mobile phone 103 is in an area where the network 102 does not have coverage. If the mobile phone 103 is available, the network sends parameters as a signal to the mobile phone 103. The parameters may be sent to the mobile phone 103 in the form of a Short Messaging Service (SMS) which is not visible to the user. The parameters may also be sent to the mobile phone embedded in a control signal, a service signal or any other mode of transmission which is invisible to the user. The parameters may comprise of information like the interval at which the location is to be provided, whether any indication is to be provided to the user of the mobile phone 103 and the time interval for this indication. The network 102 will keep checking at periodic intervals, if the mobile phone 103 is available. Once the mobile phone 103 becomes available, the network 102 will send the parameters to the mobile phone 103.

The mobile phone 103 on receiving the parameters stores the parameters in a memory present in the mobile phone 103. On successfully storing the parameters, the mobile phone 103 sends an acknowledgement to the network 102. The acknowledgement informs the network 102 that the mobile phone 103 has received the parameters and has stored the parameters successfully in its memory. On receiving the acknowledgement from the mobile phone 103, the network 102 may then delete the parameters from the memory.

On user pressing the switch off button, the mobile phone 103 checks the memory if the partial switch off mode is on. If the partial switch off mode is off, then the mobile phone 103 switches off in a normal manner. If the partial switch off mode is on, then the mobile phone 103 performs a shut down with the exception of the modules operating in the partial switch off mode. The modules necessary for operating in the partial switch off mode comprises of transmitter, GPS module and so on. The modules operating in the partial switch off mode depends on the parameters. If an indication is to be provided, then the indication means is not turned off. The mobile phone 103 sends information about the location of the mobile phone 103 at periodic intervals to the network 102.

If the authorized agency 101 desires to revoke the tracking of the mobile phone 103, the network 102 indicates to the mobile phone 103 to no longer enter the partial switch off mode by sending a second signal to the mobile phone 103, which is stored by the mobile phone 103 in the memory. The mobile phone 103 on receiving the parameters stores the parameters in a memory present in the mobile phone 103. On successfully storing the parameters in the mobile phone 103 sends an acknowledgement to the network 102. If the mobile phone 103 is not available, the network 102 stores the parameters in a memory present in the network 102. The network 102 will keep checking at periodic intervals, if the mobile phone 103 is available. If the mobile phone 103 becomes available, then the network 102 will send the signal to the mobile phone 103.

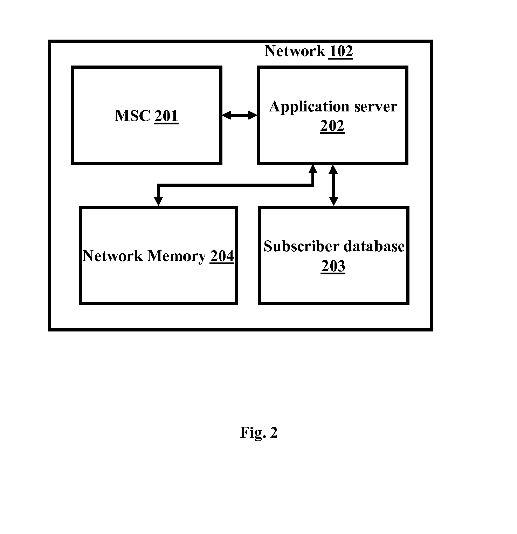

FIG. 2 depicts elements of a network, according to embodiments as disclosed herein. The network 102 comprises of a Mobile Switching Center (MSC) 201, an application server 202, a subscriber database 203 and a memory 204. The application server 202 on receiving information provided by the authority 101 regarding the identity of the mobile phone to be tracked; fetches data related to the subscriber from the subscriber database 203. The data fetched from the subscriber database 203 may include information like the current location of the mobile phone and any other relevant information present in the database 203. The application server from the information sent by the authority 101 creates a signal comprising of parameters like the interval at which the location is to be provided, whether any indication is to be provided to the user of the mobile phone 103, the time interval for this indication and so on. The application server 201 may also include information fetched from the subscriber database 203 in the signal. The application server 201 stores the parameters in a network memory 204. The application server 201 communicates the signal to the MSC 202, which attempts to send the signal to the mobile phone 103. If the mobile phone 103 is available, then the MSC 202 sends the signal to the mobile phone 103. The mobile phone 103, on receiving the signal, stores the parameters present in the signal in a memory and sends a confirmation message to the MSC 202. If the mobile phone 103 is not available or the MSC 202 does not receive the confirmation message from the mobile phone, the MSC 202 will check for the availability of the mobile phone 103 at periodic intervals and once the mobile phone 103 has become available, the MSC 202 will fetch the signal from the network memory 204 through the application server 201 and send the signal to the mobile phone 103. The MSC 202 on receiving the confirmation message from the mobile phone 103 may delete the parameters which have been stored in network memory 204. It will be obvious to a person of ordinary skill in the art that the signal to the mobile phone 103 may be sent by any suitable module connected to the network 102 and capable of transmitting a signal.

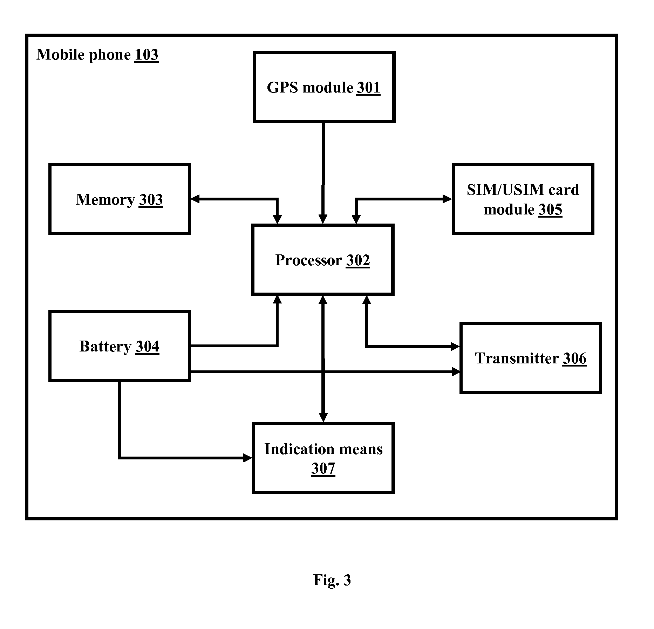

FIG. 3 depicts a mobile phone, according to embodiments as disclosed herein. The mobile phone 103 comprises of a GPS module 301, a processor 302, a memory 303, a battery 304, a Subscriber Identity Module (SIM)/Universal Subscriber Identity Module (USIM) card module 305, a transmitter 306 and an indication means 307. The processor 302 is connected to the other modules in the mobile phone 103 and controls the operation of the mobile phone 103. The memory 303 is a non-volatile memory and comprises of information relevant to the operation of the mobile phone 103, including settings from the user of the mobile phone 103, settings given by the network 102, any files belonging to the user, the phonebook of the user, messages received by the user and so on. The memory 103 also contains the IMEI number of the mobile phone 103. The SIM/USIM card module 305 contains the SIM card or the USIM card belonging to the user of the mobile phone 103. The SIM/USIM card comprises of means to enable the user to use the network 102, including the mobile number of the mobile phone 103. The transmitter 306 is the transmission means for the mobile phone 103 to transmit information in the form of signals to the network 102. An indication means 307 is also present in the mobile phone 103. The indication means 307 could be a visual indication means like a steady light, a blinking light, a lighted keypad, a blinking keypad, a blinking display or a lit up display. The indication means 307 could be a non-visual means like a vibrating means. The GPS module 301 is connected to a plurality of GPS satellites 104 through a satellite link and receives co-ordinates from the satellites 104. The battery 304 supplies power to the modules of the mobile phone 103. The battery 304 supplies power to the modules of the mobile phone 103 which are not switched of in the partial switch off mode. The battery 304 could be the normal battery present in any mobile phone. The battery 304 could also be an extra battery present inside the mobile phone, which supplies power only in the partial switch off mode to the modules which are on in the partial switch off mode. The extra battery will not be visible to the user, unless he dismantles the mobile phone 103. The extra battery may be a button cell or any battery having a small form factor.

On the user of the mobile phone switching off the mobile phone 103, the processor 302 checks the memory 303 to see if the partial switch off mode has been enabled. If the partial switch off mode has not been enabled, then the processor 302 proceeds to switch off the mobile phone 103 in a normal manner. If the partial switch off mode has been enabled, then the processor 302 checks the parameters related to the partial switch off mode to see if an indication has to be provided. The processor 302 also fetches the time interval at which the location information has to be provided to the network 102. The process also fetches the identity of the SIM/USIM from the SIM/USIM card module 305 and stores the identity of the SIM/USM in the memory 303. The identity of the SIM/USIM may be the phone number assigned to the SIM/USIM card or the IMSI number. The processor 302 then instructs the modules not necessary for the operation of the mobile phone 103 in the partial switch off mode to be switched off in a normal manner. The modules necessary for the operation of the mobile phone 103 in the partial switch off mode are instructed by the processor 302 not to switch off. The modules which are not switched off in the mobile phone 103 comprise of the transmitter 306, the GPS module 301 and the processor 302. If the mobile phone 103 has to provide an indication in the partial switched off mode, then the indication means 307 is also not switched off.

When the mobile phone 103 is in the partial switch off mode, the processor 302 at the interval, as specified in the parameters gets the co-ordinates of the current location of the mobile phone 103. The co-ordinates of the current location of the mobile phone 103 are obtained from the GPS module 301. The co-ordinates of the current location of the mobile phone 103 may also be obtained from atleast one base station, which is currently serving the mobile phone 103. The co-ordinates of the current location of the mobile phone 103 may also be obtained using triangulation from atleast three base stations. The methods of obtaining the co-ordinates of the current location of the mobile phone 103 as disclosed above are only exemplary. It will be obvious to any person with ordinary skill in the art that any suitable method may be used for obtaining the co-ordinates of the current location of the mobile phone 103. On getting the co-ordinates of the current location, the processor 302 sends the co-ordinates to the network 102 using the transmitter 306. A unique ID of the mobile phone 103 may also be sent along with the location to the network 102. The unique ID of the mobile phone may be phone number of the user of the mobile phone 103. The unique ID of the mobile phone may be the International Mobile Subscriber Identity (IMSI) of the user of the mobile phone 103. The unique ID of the mobile phone may be the International Mobile Equipment Identity (IMEI) of the user of the mobile phone 103.The unique ID is sent even if the SIM/USIM card is removed from the SIM/USIM card module 305. The processor 302 also instructs the indication means 307 to provide an indication to the user of the mobile phone 103, if an indication has to be provided to the user. The battery 307 supplies power to the processor 302, the GPS module 301, the indication means 307 and the transmitter 306.

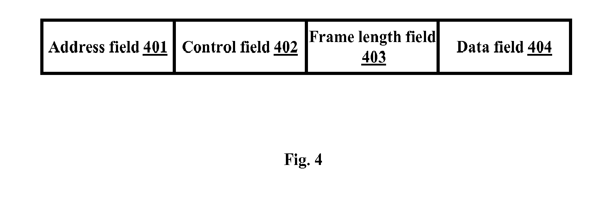

FIG. 4 depicts an example format of a signal sent by the network to the mobile phone, according to embodiments as disclosed herein. The signal, as depicted, comprises of an address field 401, a control field 402, a frame length field 403 and a data field 404. The address field 401 comprises of the ID of the mobile phone 103 to which the signal has been sent. The ID of the mobile phone may be phone number of the user of the mobile phone 103. The ID of the mobile phone may be the International Mobile Subscriber Identity (IMSI) of the user of the mobile phone 103. The ID of the mobile phone may be the International Mobile Equipment Identity (IMEI) of the user of the mobile phone 103. The control field 402 specifies the signal type to distinguish this signal from other signal types, which are sent by the network 102 to the mobile phone 103 in the course of normal operations. The control field 402 may also comprise of instructions to the mobile phone 103, which instructs the mobile phone 103 on the steps to be taken on receiving the signal. The frame length field 403 specifies the length of the frame in terms of bits. The data field 404 comprises of parameters which are sent by the network 102 to the mobile phone 103. The data field 404 may comprise of atleast of 8 bits. One bit in the data field 404 is used for turning on or off the partial switch off mode. A value of 1 in this particular bit may turn on the partial switch off mode. A value of 0 in this particular bit may turn off the partial switch off mode. One bit in the data field 404 is used for turning on or off the visual indicator flag. A value of 1 in this particular bit may turn on the visual indicator flag. A value of 0 in this particular bit may turn off the visual indicator flag. A single bit or a plurality of bits in the data field 404 may be used for indicating the time interval at which the location information is to be sent by the mobile phone 103 to the network 102. If no time interval at which the location is to be provided has been mentioned, then a pre-defined time interval may be taken. A single bit or a plurality of bits in the data field 404 may be used for indicating the time interval at which the indication has to be provided to the user of the mobile phone 103. If no time interval at which the indication is to be provided has been mentioned, then the time interval for the indication specified by the manufacturer of the mobile phone 103 may be taken as the time interval at which the indication is to be provided. The rest of the bits in the data field 404 are padding bits. The signal can use any messaging format, which uses the page request to direct the signal towards a specific targeted mobile phone.

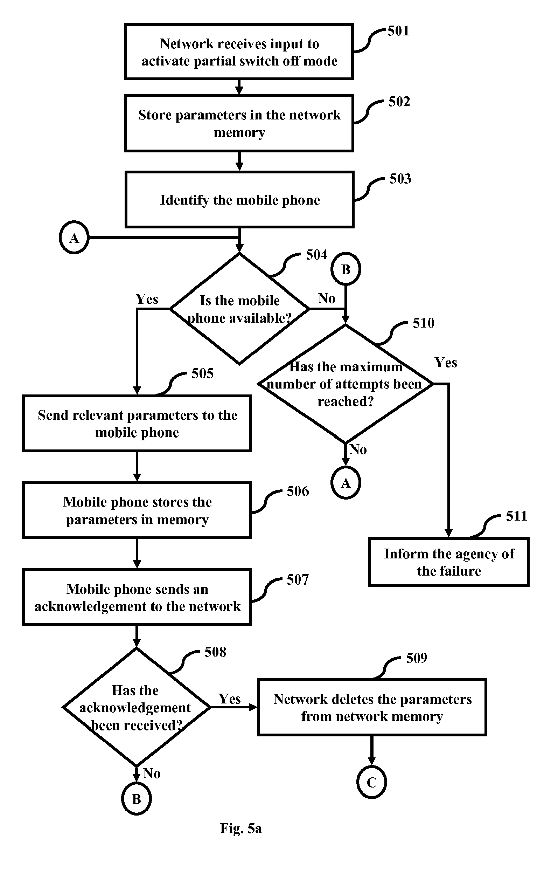

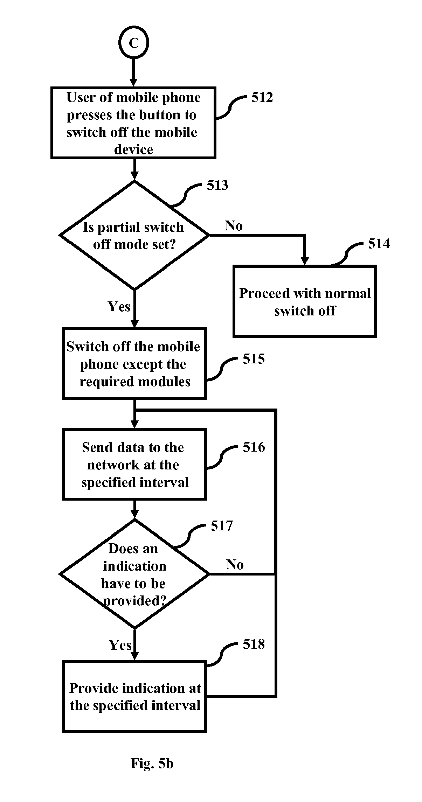

FIGs. 5a and 5b depict a flowchart, according to embodiments as disclosed herein. The network 102 receives (501) an indication to activate partial switch off mode on the mobile phone 103 of a user. The indication could be received by the network from an authorized agency 101. The network stores (502) the parameters in the network memory 204. Using the ID of the mobile number which has been provided by the authorized agency 101, the network 102 identifies (503) the mobile phone 103. The network 102 then checks (504) if the mobile phone 103 is available. If the mobile phone 103 is not available, the network 102 checks (510) if the maximum numbers of attempts to send the parameters to the mobile phone 103 have been reached. If the maximum numbers of tries to send the parameters to the mobile phone 103 have been reached, then the network 102 informs the authorized agency 101 of the failure to activate the partial switch off mode on the mobile phone 103. If the maximum numbers of tries to send the parameters to the mobile phone 103 have not been reached, then the network 102 once again checks (504) if the mobile phone is available. If the mobile phone 103 is available, the network sends (505) the parameters for partial switch off as a signal to the mobile phone 103, where the parameters have been obtained from the information received from the authorized agency 101. The mobile phone 103 on receiving the parameters stores (506) the parameters in a memory present in the mobile phone 103. On successfully storing the parameters, the mobile phone 103 sends (507) an acknowledgement to the network 102. On the network 102 receiving the acknowledgement from the mobile phone 103, the network deletes (509) the parameters stored in the network memory 204. If the network 102 does not receive the acknowledgement from the mobile phone 103, the network 102 checks (510) if the maximum numbers of attempts to send the parameters to the mobile phone 103 have been reached. If the maximum numbers of tries to send the parameters to the mobile phone 103 have been reached, then the network 102 informs the authorized agency 101 of the failure to activate the partial switch off mode on the mobile phone 103. If the maximum numbers of tries to send the parameters to the mobile phone 103 have not been reached, then the network 102 once again checks (504) if the mobile phone is available. On user pressing (512) the switch off button, the mobile phone 102 checks (513) in the memory if the partial switch off mode is present. If the partial switch off mode is absent, then the mobile phone 103 switches off (514) in a normal manner. If the partial switch off mode is set, then the mobile phone 103 performs (515) a shut down with the exception of the modules operating in the partial switch off mode. The mobile phone 103 sends (516) information about the location of the mobile phone 103 at periodic intervals to the network 102. The mobile phone 103 checks (517) if an indication has to be provided to the user of the mobile phone 103. If an indication has to be provided, the mobile phone provides (518) an indication to the user at the specified intervals. The various actions in method 500 may be performed in the order presented, in a different order or simultaneously. Further, in some embodiments, some actions listed in FIGs. 5a and 5b may be omitted.

The embodiments disclosed herein can be implemented through at least one software program running on at least one hardware device and performing network management functions to control the network elements. The network elements shown in Figs. 1, 2 and 3 include blocks which can be at least one of a hardware device, or a combination of hardware device and one or more software modules.

The embodiments disclosed herein describe methods and systems for finding the location of a mobile phone when said mobile phone is switched off. Therefore, it is understood that the scope of the protection is extended to such a program and in addition to a computer readable means having a message therein, such computer readable storage means contain program code means for implementation of one or more steps of the method, when the program runs on a server or mobile phone or any suitable programmable device. The method may be implemented in a preferred embodiment through or together with a software program written in e.g. Very high speed integrated circuit Hardware Description Language (VHDL) another programming language, or implemented by one or more VHDL or several software modules being executed on at least one hardware device. Devices may also include means which could be e.g. hardware means like e.g. an ASIC, or a combination of hardware and software means, e.g. an ASIC and an FPGA, or at least one microprocessor and at least one memory with software modules located therein. The method embodiments described herein could be implemented partly in hardware and partly in software. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the embodiments as described herein.

## Claims

1. A method for enabling a mobile phone to transmit location information in a telecommunication network when said mobile phone is switched off, said method comprising steps of
said network sending a signal comprising of a plurality of parameters to said mobile phone, wherein said signal enables a partial switch off mode;
said mobile phone storing said parameters in a memory storage in said mobile phone;
said mobile phone checking if said partial switch off mode is enabled when user of said mobile phone attempts to switch said mobile phone off;
said mobile phone performing a partial switch off if said partial switch off mode is enabled; and
said mobile phone sending location of said mobile phone at a first periodic interval.

2. The method, as claimed in claim 1, wherein said network stores said plurality of parameters in a memory.

3. The method, as claimed in claim 1, wherein when said mobile phone is partially switched off, an indication is provided at a second periodic interval.

4. The method, as claimed in claim 1, wherein said parameters comprise of said first periodic interval, said second periodic interval and a parameter to notify if said indication is to be provided.

5. The method, as claimed in claim 1, wherein said mobile phone sends an acknowledgement to said network, on storing said parameters in said memory storage.

6. The method, as claimed in claim 1, on failing to contact said mobile phone, said method further comprising:
said network checking for availability of said mobile phone at periodic interval; and
said network sending said signal to said mobile phone on contacting said mobile phone.

7. The method, as claimed in claim 1, wherein said mobile phone does not turn off Global Positioning System (GPS) module and transmitter module of said mobile phone in said partial switch off.

8. The method, as claimed in claim 1, wherein said location information comprises of latitude and longitude co-ordinates of location of said mobile phone, and
a unique identity of said mobile phone.

9. A mobile phone enabled to transmit location information when said mobile phone is switched off, said mobile phone comprising atleast one means adapted for
storing parameters in a memory storage in said mobile phone, wherein said parameters are received from network to which said mobile phone belongs and said parameters enable a partial switch off mode;
checking if said partial switch off mode is enabled when user of said mobile phone attempts to switch said mobile phone off;
performing a partial switch off if said partial switch off mode is enabled; and
sending location of said mobile phone at a first periodic interval.

10. The mobile phone, as claimed in claim 9, wherein when said mobile phone is adapted to provide an indication at a second periodic interval when said mobile phone is partially switched off.

11. The mobile phone, as claimed in claim 9, wherein said mobile phone is adapted to send an acknowledgement to said network, on storing said parameters in said memory storage.

12. The mobile phone, as claimed in claim 9, wherein said mobile phone is adapted to not turn off Global Positioning System (GPS) module and transmitter module of said mobile phone in said partial switch off.

13. A network enabled to track location of a mobile phone, said network comprising atleast one means adapted for
creating a signal to indicate to said mobile phone to perform a partial switch off, wherein said signal comprises of a plurality of parameters to control said partial switch off in said mobile phone; and
sending said signal to said mobile phone.

14. The network as claimed in claim 13, wherein said network is adapted to store said parameters in a memory.

15. The network as claimed in claim 13, wherein said network is adapted to receive an acknowledgement from said mobile phone, after said mobile phone stores said parameters in memory of said mobile phone.

16. The network as claimed in claim 13, wherein said network is further adapted for
checking for availability of said mobile phone at periodic interval; and
sending said signal to said mobile phone on contacting said mobile phone.
